# EUROPEAN PATENT SPECIFICATION

(11) **EP 3 426 612 B1**
(45) Date of publication and mention of the grant of the patent: **27.09.2023**
(21) Application number: 17711262.0
(22) Date of filing: 07.03.2017
(51) Int. Cl.: F26B 3/24, C02F 11/12, F26B 17/20, F26B 21/12, C02F 103/22, C02F 11/13, C02F 11/125, F26B 21/04

(54) **METHOD FOR TREATING WASTE**
VERFAHREN ZUR BEHANDLUNG VON ABFALL
PROCÉDÉ DE TRAITEMENT DE DÉCHETS

(30) Priority: 08.03.2016 GB 201603952
(43) Date of publication of application: 16.01.2019
(73) Proprietor: Energy Recovery Systems Ltd, Alness, Highland IV17 0QA (GB)
(72) Inventor: IMRIE, George Graham, Alness Highland IV17 0QA (GB)
(74) Representative: Macdonald, Kate
(86) International application number: PCT/GB2017/050600
(87) International publication number: WO 2017/153733

(56) References cited:
- AU-B4- 2014 100 146
- US-A- 5 216 821
- US-A- 5 263 267
- US-A1- 2003 228 196

## Description

### Field of the Invention

The present invention relates to a method for treating materials such as waste products and by-products of industrial processes e.g. slurries comprising solids and liquids, or, more particularly, slurries comprising solids, oil(s), and water. The present invention is particularly applicable to the treatment of slurries such as drill cuttings and drilling mud from oil and gas wells. The invention is also particularly applicable to the treatment of fish waste slurry from fish processing plants comprising solids, oil(s) and water.

### Background

Substances produced by oil well drilling operations could be treated by the apparatus and method(s) of the present invention. For example, drilling mud is circulated from the drilling rig down the drill string then recovered from the well. The drilling mud lubricates and cools the tool and helps to circulate swarf, known as drill cuttings, back to the surface. The mud engineer may pass recovered fluid through one or more basic processes on the rig to control the physical properties of the mud during the drilling process so that it may be re-used. However, once it is spent it must be disposed of. Also, drill cuttings separated from the drilling mud may also need to be disposed of. Drilling cuttings previously might be crudely washed and discharged overboard, however discharge to sea for oil containing material was banned several years ago. Annual drill cuttings volume for the North Sea might be as much as 1.2M m².

Existing disposal processes are complicated and expensive, as hydrocarbon content must be reduced to low value e.g. below 1% by mass before the waste can be landfilled. Various onshore treatment technologies exist, but are characterised by large plants, and high energy requirements.

There is a real need for the development of alternative technology with lower operating costs. The preferable solution would be a modular mobile plant which could be deployed to the drilling environment to treat the waste at source, splitting it into one or more volumetrically reduced hazardous waste portion(s), and one or more inert portion(s). There is also a need for effective alternative technology with lower energy consumption.

Drilling wastes are broadly composed of oil(s), water and a solid component, typically drill cuttings, such as swarf or sand. Water and sand are inert from a waste management point of view. Clean water could be disposed of, over side in the offshore environment or to ground in an onshore context, and sand or swarf could be disposed of as inert waste or recycled as a building material, and recovered oil(s) could be graded and sent for onward processing. This would significantly reduce the amount of waste to be transported, as water can be discharged at source, oil(s) may be reusable onsite leaving hydrocarbon-free solids to be forwarded for onward disposal, potentially bringing a significant cost saving.

The problem is not new nor is the desire to find a suitable solution, indeed many oil and gas operators are actively looking at this issue. The technical and engineering challenges of producing a plant and associated processes powerful, yet efficient enough to have a useful volumetric output, but also preferably small enough to be mobile, are significant.

GB2392393 GARRICK describes a process and apparatus for treating drill cuttings using rotary flails to generate frictional heat in the reactor by rotating the flails in the reactor to beat the contaminated waste products thereby changing the phase of the contaminant. This process is not particularly efficient or effective and may suffer from low throughput volumes.

WO2006003400 GARRICK describes an apparatus and method for treating waste products such as drill cuttings wherein in the rate of discharge of treated material from the reactor is controlled.

US2003/0228196 SATCHWELL describes a continuous thermal remediation process and apparatus for removing contaminants from solids e.g. drill cuttings, contaminated soils. Three sets of twin hollow thermal screw conveyors are used to pass the contaminated solids via three temperature zones, under vacuum. The twin thermal screw conveyors have holes along their length to directly heat the solids via a hot gas delivery system (see para 72) in low temperature, high temperature and pyrolysis units. This document does not address the problem of thermal processing of liquids such as slurries.

US4139462 SAMPLE describes a method and apparatus for removing volatile materials (distilling volatile components) from drill cuttings in a non-oxidative atmosphere at high temperatures. The damp raw cuttings are separated from the drilling fluid by use of one or more screens before passing through a heated vessel. This document does not address the problem of thermal processing of liquids such as slurries.

US4319410 HEILHECKER describes a continuous feed, high vacuum, low temperature distillation unit and process for treating oily solids such as oil-based drilling mud cuttings under vacuum. The system comprises a vacuum distillation unit with an auger-housing and a screw or auger for conveying cuttings from inlet to outlet system. The outlet system includes a four-way cross for discharge of solids and vapours to a recovery unit. Heat exchange fluid passes in indirect heat exchange relationship to the oily cuttings and exits via a second outlet. This process and apparatus is unsuitable for the processing of liquids such as slurries.

WO9835767 PATE describes an apparatus for recovering hydrocarbons from solids under vacuum at high temperatures using an internal spiral flight circumferentially located on a rotary drum. Withdrawn vapours are condensed and collected. This process and apparatus is unsuitable for the processing of liquids such as slurries.

GB295225 BITUMENOIL describes a rotating cylindrical retort for processing shale or carbon materials. Shale is fed in via a hopper into an inclined chamber, and a screw conveyor forces the material into a revolving chamber, from which air is preferably excluded. A vertical discharge tube allows downward discharge of solids and upward collection of vapours into a pipe for condensing in several stills. This document does not address the treatment of liquids such as slurries.

GB2522619 BARNFATHER describes use of a heated rotary kiln and distillation unit for use at high temperatures (up to 1700°C) in treating halite, rock salt, or oil-based drilling fluid. Laterally placed perforations in the kiln body allow vapour to escape rendering the process of liquids, such as slurries, problematic.

US5242245 SCHELLSTEDE describes a method and apparatus for recovering hydrocarbons from soils under reduced pressure using concentrically mounted rotatable cylinders with an auger extending between and supplying heat to the soils. Electric heat elements are provided within inner cylinders for use in conjunction with insulation jackets. This document addresses the processing of soils (i.e. solids).

US5372458 FLEMMER describes treating drilling mud and using a lifter to expose it to a hot gas stream from burners within the heated chamber to form pellets. This document does not address the treatments of liquids such as slurries.

GB848817 BOWSER describes a batch vacuum distillation removal of solid contaminant from organic solvents or oil. This document does not address continuous processing.

US5490907 WEINWURM describes a continuous method for treating sludge by addition of liquid absorbing reagent powder in a mechanically fluidised distillation vessel under a partial vacuum in a non-oxidising atmosphere. Fluidisation is achieved by ploughing elements. It is particularly directed towards treatment of paint sludge and it not directed to the treatment of slurries comprising solids, oil(s) and water. It relies on the use of a reagent powder to absorb liquid.

US2015/0175463 JOENSEN describes a repetitive batch system and method for dewatering oil/water sludge in a vacuum distillation device. A pre-heating chamber and separate processing chamber are provided. This document does not address the processing of slurries comprising oils, solids and water.

US3693951 LAWHON describes the treatment of well cuttings offshore using a conveyor to move cuttings through a dryer. This document does not address the processing of slurries comprising oils, solids and water.

US 5 216 821 discloses a slurry drying method.

The present invention seeks to alleviate one or more problems presented by the above art. In one or more embodiments, the invention provides a more efficient method of processing slurries e.g. comprising non soluble solids and liquid(s), such as solids, oil(s) and water. Several of the above documents provide for use of chemicals, or a chemical change in the constituents, or use of very high temperatures, or open flames, thus rendering these unsuitable for use in high risk environments (e.g. on oil and gas installations offshore or onshore).

### Statements of the Invention

In an aspect of the invention there is provided a method for treating slurry according to claim 1. Further embodiments are provided in the dependent claims.

In further embodiments of the invention there is provided a method for treating waste slurry from oil and/or gas drilling operations, and/or for treating waste slurry from fish processing.

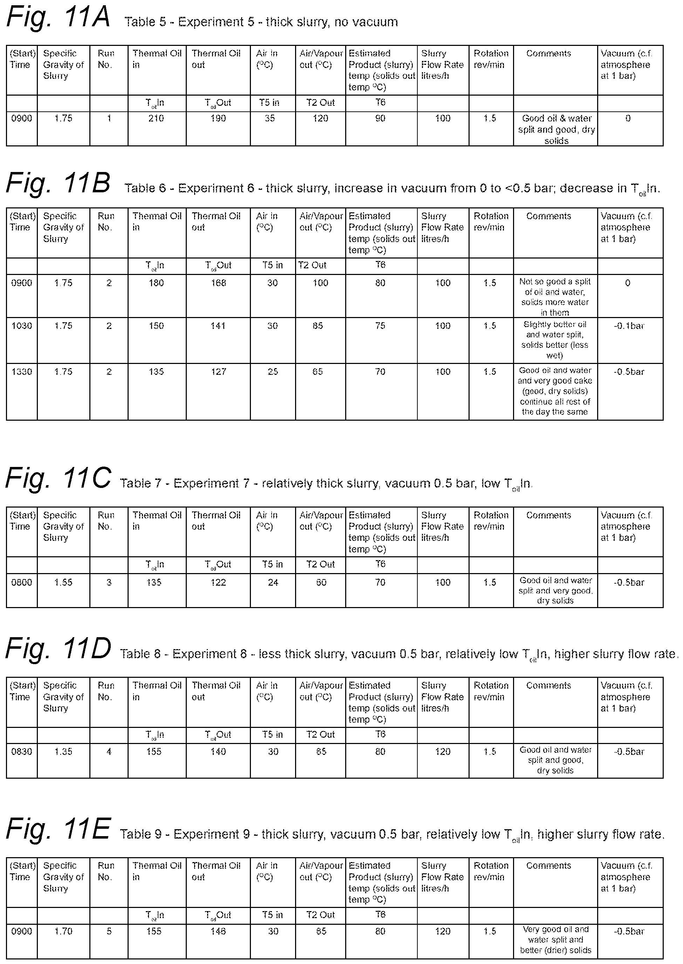

The treatment chamber is configured to support a vacuum. Preferably, the method further comprises using a vacuum pump. Preferably, the vacuum in the treatment chamber is: about 0.1 bar, 0.2 bar, 0.3 bar, about 0.4 bar, about 0.5 bar, 0.25 to 0.75 bar, 0.4 bar, 0.5 bar, <0.5 bar. A preferred operating pressure is just under 0.5 bar. In some circumstances, 0.9 bar, or just under 0.9 bar is possible but less preferred (see Figs 11A - 11G). It is also preferred that the vacuum remains constant (e.g. within 5% or 10% of the desired value) i.e. the partial vacuum is well maintained.

Preferably, the slurry is heated to a controlled, predetermined temperature. The method comprises controlling the treatment temperature of the slurry. This may be the actual measured temperature of the slurry, or it may be the temperature of the slurry corresponding to a temperature at which vapours are drawn off, or preferably, commence being drawn off. The temperature of the gas/vapour(s) drawn off is 50°C-100°C, more preferably 60°C-100°C, more preferably 50°C-80°C, more preferably at or about any of 50°C, 55°C 60°C, 65°C, 70°C, 75°C, 80°C, 85°C, 90°C, 95°C, 100°C, or 60°C-80°C, or 60°C-100°C. In addition, the treatment temperature of the slurry may be controlled by controlling the measured temperature of the exiting solids.

Preferably, the temperature and pressure combination are below the flash point of the slurry components. The heated material conveyor comprises at least one heated screw conveyor. Preferably, the material conveyor comprises at least two intermeshing, heated screw conveyors. Preferably, the heated material conveyor comprises twin, intermeshing, heated screw conveyors. Preferably, the twin, intermeshing, heated screw conveyors are self-cleaning, e.g. by virtue of their relative surface contact and/or speed of rotation with respect to one another. Preferably, the screw conveyor(s) provided comprise hollow flight, thermally-heated screw conveyor(s). Preferably, the screw conveyor(s) provided are heated by thermal oil. Preferably, the temperature of the oil is around 200°C, more preferably 180°C-220°C, more preferably 190°C-210°C. Preferably the temperature of the oil is at or about or below any of the following temperatures, 180°C, 175°C, 170°C, 165°C, 160°C, 155°C, 150°C, 145°C, 140°C, 135°C, 130°C, 125°C, 120°C.

Preferably, the method uses a gas circulation unit, e.g. a fan or blower, for drawing vapours and gas through the chamber into a condenser. The treatment chamber comprises a gas inlet port and a gas outlet port for flowing gas through the treatment chamber. The gas inlet port and gas outlet port are configured so that vapours and gas flow in a direction generally, or substantially, opposite (e.g. at 180°) to the direction of movement of slurry and/or solids drawn though the treatment chamber from the first end towards the second end. The gas outlet port is at or near the first end of the treatment chamber. The gas inlet port is at or near the second end of the treatment chamber. The apparatus, and method, is configured to support a gas flow of 0.5 m/s or less (i.e. very gentle).

Preferably, the heated material conveyor is inclined at a predetermined angle with respect to the horizontal rising upwardly from the first end to the second end. Preferably, the treatment chamber is inclined at a predetermined angle with respect to the horizontal. Preferably, the treatment chamber and material conveyor are both inclined at the same predetermined angle with respect to the horizontal. Preferably, the heated material conveyor and the treatment chamber are configured so that at least part of an upper end of the heated material conveyor is above an expected level of slurry in the treatment chamber. Preferably, a solids outlet port is provided at or near the second end of the treatment chamber, preferably, above an expected upper surface level of slurry in the treatment chamber.

Preferably, the solids outlet port comprises a rotary valve, preferably, configured to be opened intermittently.

Preferably, the apparatus comprises a separator configured to receive extracted gas and liquids from the condenser, and to separate these into gas and liquid(s).

Preferably, the chamber comprises a slurry inlet port at or near the first end of the treatment chamber. Preferably, the slurry inlet port is configured to receive slurry in a continuous or quasi-continuous manner.

Preferably, the at least one thermal screw conveyor assembly comprises twin, intermeshing, self-cleaning, screw conveyors. Preferably, the twin, intermeshing, thermal screw conveyors are self-cleaning by virtue of their relative surface contact and/or speed of rotation with respect to one another.

Preferably, the treatment chamber and/or at least one heated screw conveyor assembly are inclined at a predetermined angle with respect to the horizontal rising upwardly from the first end to the second end. Preferably, the treatment chamber and material conveyor are both inclined at the same predetermined angle with respect to the horizontal. Preferably, the entrance to the solids exit chute is typically below the level of solids at or near the second end but above the level of slurry at or near the first end.

The method comprises: providing a vacuum in the treatment chamber. Preferably, the method comprises: providing a vacuum in the treatment chamber of: about 0.25 to about 0.75 bar, about 0.4 bar, about 0.5 bar, 0.25 to 0.75 bar, 0.4 bar, 0.5 bar, 0.9 bar.

Preferably, the method comprises: treating slurry in the treatment chamber such that the solids are substantially dry before removal.

The method comprises providing at least one of: at least one heated screw conveyor; preferably at least two intermeshing, heated screw conveyors; twin intermeshing, heated screw conveyors; twin intermeshing, self-cleaning heated screw conveyors.

Preferably, the method comprises: providing at least one hollow flight, thermally-heated screw conveyor(s). Preferably, the method comprises: thermally heating the hollow flight, thermally-heated screw conveyor(s) using thermal oil. Preferably, the method comprises: drawing gas through the chamber from a gas inlet port to a gas outlet port and into the condenser. Preferably, the gas is air. Preferably, in the method, gas is drawn through the chamber in a direction generally or substantially opposite to the direction of movement of slurry through the treatment chamber from the first end to the second end.

Preferably, the method comprises: providing at least one heated material conveyor inclined at a predetermined angle to the horizontal, rising upwardly from the first end to the second end; drawing material upwardly along the inclined heated material conveyor in a direction from the first end towards the second end.

Preferably, the method comprises: providing a rotary valve at a second end of the chamber and opening this intermittently to remove solid(s) from the treatment chamber.

The method comprises: separating extracted gas and liquid(s).

The method comprises: re-circulating extracted gas into the treatment chamber.

Preferably, the method comprises: selecting and configuring one or more parameters from the following:
pressure within the treatment chamber;
transportation time of slurry and/or solids within the treatment chamber from the an inlet port to an exit port;
temperature of incoming slurry;
temperature e.g. average temperature at a predetermined location, of the slurry within the chamber;
temperature of extracted vapour(s);
flow rate of gas through the chamber;
temperature of re-circulated gas following a vapour condensing step;
temperature of the heated material conveyor;
temperature of the solid(s)on egress;
temperature of the thermal oil inlet;
temperature of thermal oil outlet;
rotation of the heated screw conveyors where provided;
% of solids by mass of incoming material;
rate of ingress of incoming material;
moisture level of solid(s) on egress;
incline of the chamber;
controlling the vacuum to be within a pre-determined value;
controlling the level of slurry on ingress (e.g. via a suitable weir);
so that solid(s) on egress have a desired moisture and/or hydrocarbon level, and preferably are substantially dry (e.g. to less than 2.5%, or 2% or 1% by weight of liquids, and/or hydrocarbons).

Preferably, the method comprises not chemically changing the components of the slurry.

Several embodiments of the invention are described and any one or more features of any one or more embodiments may be used in any one or more aspects of the invention as described above.

### Brief Description of the Invention

The present invention will now be described, by way of example only, with reference to the following figures. The same reference numerals refer to the same features throughout the figures.
Figure 1 shows a schematic diagram of apparatus according to example embodiment(s) of the invention.
Figures 2A and B show elevation and plan views of a treatment chamber for use in apparatus and method(s) according to example embodiment(s) of the invention, such as the apparatus of Figure 1 and/or the method(s) of Figure(s) 8 and 9.
Figure 3 shows a cross-sectional view of the reaction chamber of Figures 2A and 2B along line AA'.
Figure 4 shows a close up plan view of twin intermeshing, self-cleaning, thermally-heated hollow flight screw conveyors in a preferred example embodiment of the invention.
Figure 5 shows a schematic perspective view of alternative, intermeshing screw conveyors and dry solids (here sand) at an upper end of a treatment chamber produced just before egress of solids according to an example embodiment of the invention.
Figure 6 shows a side elevation (region A) and partially cross-sectional (region B) views of a screw conveyor for use in example embodiment(s) of the invention.
Figure 7 shows a schematic, cross-sectional view of a hollow flight, thermally-heated screw conveyor illustrating the path of thermal heating fluid typically 'in' through the central shaft of the screw conveyor and 'out' through the continuous hollow flight of the screw conveyor. Whilst the path of the heating fluid can be opposite to that shown (i.e. in through the flights and out through the central shaft), the arrangement shown may be preferred in certain circumstances as it provides efficient, even heating.
Figure 8 shows method steps for use in method(s) for treating materials such as slurries in a further aspect of the invention.
Figure 9 shows optional method steps for use in example method(s) of the invention.
Figures 10A to 10D show example experimental conditions and results produced from apparatus and method(s) according to example embodiments of the invention.
Figures 11A to 11G show experimental conditions and results produced from apparatus and method(s) according to further embodiments of the invention.

### Detailed Description of the Invention

A slurry is a mixture of insoluble solids, typically in particulate form, in one or more liquids, examples include cement slurry, bentonite slurry, clay slurry, coal slurry. Other examples of slurries may include two or more immiscible liquids such as one or more oil(s) and water as well as insoluble solid particles. These are particularly difficult to separate into component parts for disposal.

In fish waste processing macerated salmon may comprise around 28% oil in a slurry of solids, oil(s), and water. The fish oil will evaporate out at around 90°C.

Treatment of large volumes of slops (e.g. slurries) in oil and gas, and fish processing industries is costly and an environmentally challenging task. The present invention provides method(s) an apparatus for the treatment of oily contaminated drilling slops that can be used at on shore treatment facilities or offshore (rig-based) locations. The apparatus is (relatively) compact and mobile, is easy to operate, has lower energy cost and can handle a wide range of slops, from slightly contaminated to heavy mud e.g. up to 45%- 65% solids.

The types of slurries that can be handled include:
- 10% to 65% (by mass) solids, 35% to 90% (by mass) liquid(s).

Sometimes slurries are referred to by their specific gravity (SG). For example, slurry with 1.52 SG may comprise by weight 31% oil, 36% water, and 33% solids. A slurry with 1.48 SG may comprise 30% oil, 36% water and 34% solids by weight. A slurry with 1.44 SG may comprise 32% oil, 38% water, and 30% solids by weight. Calculation and measurement of specific gravity of slurries may be undertaken by any known method.

The liquid component may comprise any variation of oil(s) and water.

The output streams of separated solids, oil(s) and water can be produced to high environmental standards such that water can be discharged to sewage or sea, solids can be sent to landfill, and oil(s) can be re-used as process fuels. The operating temperatures are relatively low (to avoid flashing or cracking of slurry constituents), typically up to around 240⁰C/250⁰C/260⁰C or even lower, enabling use in hazardous environments (such as rigs).

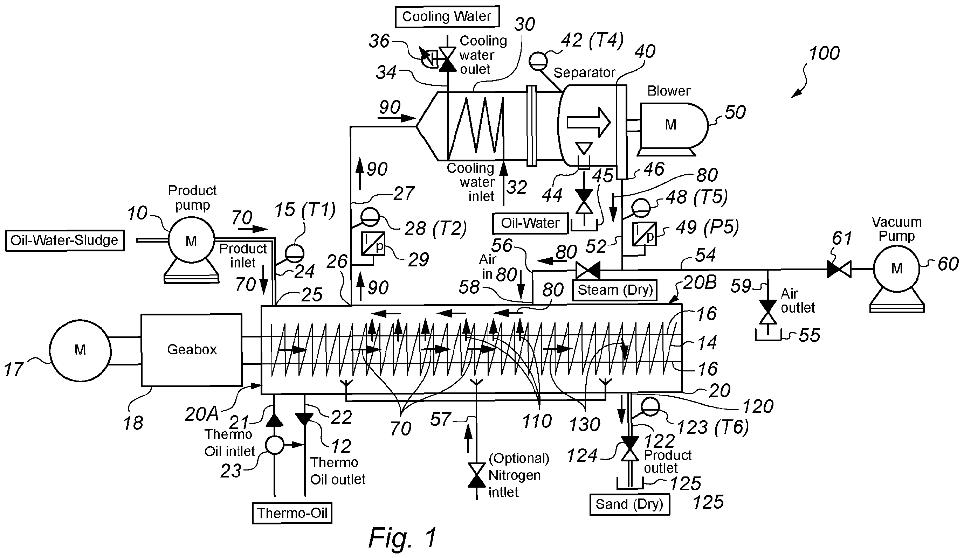

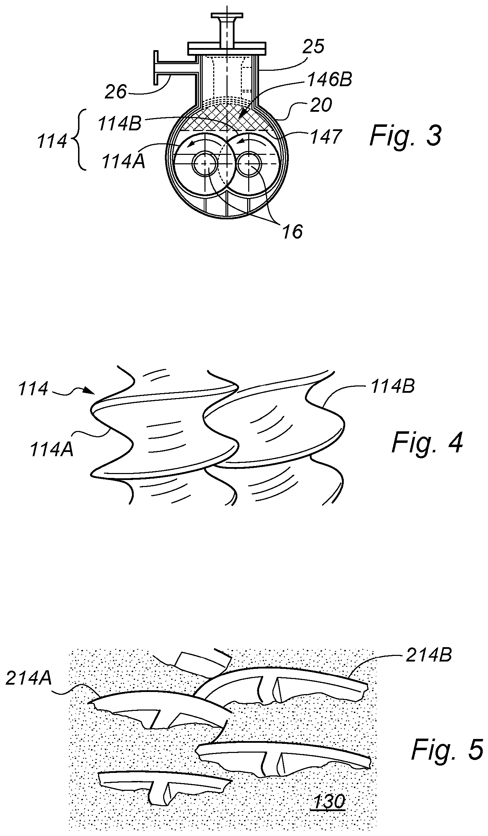

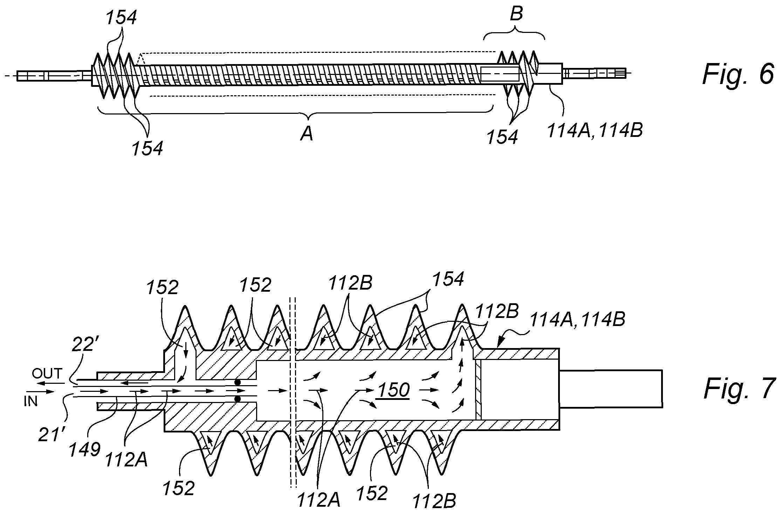

Describing an example embodiment in general terms with reference to Figure 1, apparatus 100 comprises a treatment chamber 20, condenser 30, fan 50, and vacuum pump 60. Whilst these components are preferably provided separately, one or more of these these may be combined together e.g. fan 50 and pump 60 may be combined in a vacuum pump and air (or inert gas) recirculation unit. Treatment chamber 20 comprises a slightly inclined, preferably watertight, preferably stainless steel, chamber with at least one and preferably two (preferably intermeshing) screw conveyors (not shown) 114A, 114B mounted inside it (see Figures 3 and 7). Screw conveyors 114A, 114B are shown as screw conveyor assembly 14 in Figures 1. Both treatment chamber 20 and screw conveyor assembly 14 are double-walled and a thermal heated fluid, e.g. oil 12, is circulated in the intra-wall void. This enables treatment chamber 20 to be heated to a controlled, predetermined temperature. The material to be treated is introduced at one end, preferably a lower first end 20A, of treatment chamber 20 by a pump 10 and slowly drawn upwards toward a raised second end 20B by rotation of screw conveyor assembly 14. A water-cooled condenser 30 is connected to treatment chamber 20 and oil vapour, water vapour, and air are drawn into the condenser either by natural convention currents, or more preferably by fan 50. Liquid condenses out from the mixture of oil vapour, water vapour, and air and the dry air is re-circulated, preferably at low pressure (by the action of the vacuum pump 60) back to treatment chamber 20. At a lower portion of the raised second end 20B of treatment chamber 20, a rotary valve 124 is provided so that solids can exit treatment chamber 20 via outlet port 120 without adversely compromising the desired vacuum inside. Typically rotary valve 124 opens automatically, say 10 times an hour to allow product (e.g. solid(s)) to exit. Rotary valve may also be under manual control.

In operation, an externally heated thermal fluid 12 is pumped at a predetermined temperature through hollow flights (not shown) of screw conveyor assembly 14 to heat the slurry (and chamber) internally. Preferably, the same thermal fluid 12 is also circulated around optional heating jacket (not shown) of treatment chamber 20 to heat the chamber externally.

Thermal fluid 12 (although different heating arrangements may be used) is circulated through screw conveyor assembly 14 as will be explained later. At the same time, a partial vacuum is applied to the apparatus to reduce the pressure in the chamber to a desired level, typically about -0.5 bar or thereabouts. Preferably the desired temperature of slurry within the chamber is typically less than that required to crack or chemically change the materials to be treated and preferably also less than the flashpoint of the expected hydrocarbon content of the slurry given the prevailing pressure in the chamber.

Material to be treated, e.g. slurry, the flow of which is indicated by arrows 70, is introduced into treatment chamber 20 at inlet port 25 and drawn up, mixed, and internally heated by the action of the screw conveyor assembly 14. The heat and reduced pressure in the treatment chamber result in more efficient and effective vaporisation of the oil(s) and water from the solids within the slurry. The resultant vapour(s) 90 are drawn off, by small circulation currents of gas, preferably air, circulated by means of fan 50, and are drawn into the condenser 30. The vapour(s) 90 are returned to liquid form by the drop in temperature in condenser 30 and are collected in a collecting tank 45 by gravity. The resulting fluid can be further processed, e.g. by separation under gravity or by settling action, to separate the oil(s) and water. Meanwhile, the now dry air 80 is preferably recirculated back to treatment chamber 20, and solid(s) 130 are discharged via rotary valve 124 into solids holding bin 125.

In more detail now, Figure 1 shows a schematic overview of treatment apparatus 100 according to one example embodiment of the invention. Treatment apparatus 100 comprises an inlet pump 10, a treatment chamber 20, condenser 30, optional separator 40, fan unit 50 (also known as a blower) and optional but preferable vacuum pump 60 and indeed a means to ensure a gas/air flow (e.g. a fan 50) is optional but preferable. Inlet pump 10 is connected to an inlet port 25 of treatment chamber 20 by an inlet duct 24. Material to be processed e.g. slurry 70 comprising liquids e.g. oil(s) and water, and solids, is pumped along material inlet duct 24 from inlet pump 10 into treatment chamber 20 via inlet port 25 at a first end 20A of treatment chamber 20. Optional temperature gauge 15 measures the temperature T1 of incoming material to be treated within inlet duct 24. For example, pump 10 may comprise a 2.54 cm (1 inch) vane pump for thinner (runnier) materials (e.g. < 20% solids by weight). Alternatively, for example a 6.35 cm (2.5 inch) displacement pump can be used, capable of pumping material up to 70% solids by weight.

Treatment chamber 20 is typically elongate and may be, for example, 1 to 5m in length or even longer and 0.2 to 3m in diameter. Since material (slurry 70) is drawn along the chamber, as will be described later, the length of this journey (and the time it takes) is in part determined by the length of the chamber (or at least an operable part, e.g. a treatment zone, of the chamber). Thus, varying the length of the chamber provides a way of varying the treatment process as does varying the speed of drawing slurry along, and the temperature and pressure conditions within chamber 20. Different input materials will typically require different treatment process conditions. It is envisaged that, where the exact content of material to be treated is not known, the treatment chamber and treatment process conditions may be varied 'on the fly' during processing until optimal conditions are achieved. Any poorly treated initial material can be re-mixed with further incoming material to be re-inputted into the treatment chamber once appropriate conditions are established.

The material to be treated typically comprises slurries i.e. mixture(s) of liquids and insoluble solids such as oil(s), solids, and water. Examples include drilling mud(s), drilling cuttings and macerated fish processing waste. The treatment comprises separation of solids from liquids so that the solids are substantially dry and/or substantially free from oil(s), i.e. the hydrocarbon component is reduced to a desired level, preferably without any cracking or chemical changes of the components. Where oil(s) are involved this means the temperature and other process conditions are preferably carefully controlled for safety reasons, for example, maintaining the conditions below the expected flashpoint of materials for the temperature and pressure conditions is desirable.

The treatment chamber 20 is preferably configured to contain liquids such as slurries e.g. by being a watertight container. Preferably this water tightness extends to the entire treatment chamber, and the inlet and outlet ports of the treatment chamber 20 and associated ducts and pipework, although in one embodiment only a lower portion of treatment chamber 20 may be designed to be watertight. Preferably the treatment chamber 20 is also airtight, so that it will support at least a small desired vacuum.

Supported within treatment chamber 20 is a material conveyor assembly 14 comprising at least one, but preferably comprising at least two twin screw conveyors (not shown). One or more alternative material conveyors may be used, but preferably twin screw conveyors and more preferably, intermeshed twin screw conveyors, even more preferably hollow flight, thermal, intermeshing twin screw conveyors, even more preferably self-cleaning, hollow flight, thermal, intermeshing twin screw conveyors are used (as will be described in more detail later). "Thermal" means heated by thermal methods e.g. circulation of thermal fluid.

A gearbox 18 driven by a motor 17 drives the material conveyor assembly 14 to transport material e.g. slurry from inlet port 25 towards an outlet port 120. The flow of slurry from the inlet port 25 towards an outlet port 120 for solids is indicated by arrows 70. Where two twin screw conveyors (not shown) are used, centrelines 16 in Figure 1 illustrate their general location and general orientation within treatment chamber 20. Treatment chamber 20 is preferably double-walled to form an optional heated jacket and has an optional intra-wall volume (not shown) that may be heated via thermal oil 12. Heated thermal oil 12 is circulated via thermal oil inlet 21 and thermal oil outlet 22 within the external jacket (not shown) of treatment chamber 20. This provides external, even heat to the internal volume of chamber 20. An optional inert gas inlet system 57 (e.g. for nitrogen gas) may also be provided for providing inert gas (instead of air) for circulation in the chamber. Nevertheless, it is preferred to carry out the process in air, preferably under a slight vacuum.

Where one or more hollow flight screw conveyor(s) (not shown) are used, thermal oil may be circulated within the hollow flights to heat the external surfaces of the flights of the screw conveyor(s) that are in contact with material being treated. This results in internal heating of the slurry, whilst it is being mixed and drawn along by screw conveyor assembly 14. Furthermore, this internal heating is substantially even over the outer surface of the screw conveyor 14 and is relatively slow changing (and therefore 'gentle'). Alternative methods and arrangements for providing internal heat to the material (preferably screw) conveyor assembly may be envisaged so as to provide internal heating and mixing of the slurry as is drawn along by the material conveyor assembly.

A gas outlet duct 27 is provided, preferably near the material inlet 25 (e.g. at or near the first end 20A of treatment chamber 20, or a treatment zone within the chamber 20) for extracting vapour(s) and gas 90 from the chamber via a gas outlet port 26. Where the slurry comprises oil(s), solids, and water, and air is used as a circulation medium, the extracted gas 90 will typically comprise air as well as oil vapours and water vapour both evaporated from the slurry being treated in treatment chamber 20. A temperature gauge 28 measures the temperature T2 of the extracted gas and a pressure gauge 29 measures the pressure P2 within gas outlet duct 27. The extracted mixture of gas and vapours 90 is passed into condenser 30. Condenser 30 is cooled by cooling medium e.g. water circulated around condenser 30 via cooling inlet 32 and water outlet 34. A tap 36 controls the flow of cooling water around the condenser. The temperature T3 of the cooling water may also be measured by a temperature gauge (not shown).

The oil(s) vapour and water vapour components of the extracted gas 90 condense into liquids within the condenser, the air and condensed liquids (typically an oil(s) and water mixture) are passed to separator 40 (this may be a simple T-piece) and the liquid drops out of liquid outlet 44 into a liquid container 45.

A temperature gauge 42 may be used to measure the temperature T4 of the gas at the exit of the condenser. Fan 50 draws the (now relatively) dry gas 80 from separator 40 and passes this via separator outlet 46 into recirculated gas duct 52. The temperature T5 and pressure P5 of the dry gas (typically air) within recirculated gas duct 52 are preferably measured here e.g. by temperature gauge 48 and pressure gauge 49. The air flow may be very low (e.g. around 0.5m/second or less), just enough to cause a circulation of low pressure air into chamber 20 and out towards condenser 30 dragging evaporated vapours with it.

Vacuum pump 60 is connected by a valve 61 and vacuum duct 54 to recirculated gas duct 52 and recirculated gas inlet duct 56 leading to recirculated gas inlet port 58 of treatment chamber 20. Optionally an air and liquid outlet 59 is also provided leading to a drip tray 55 (for any liquid not yet removed). The vacuum pump 60 reduces the pressure within recirculated gas duct 52 and recirculated gas inlet duct 54 and also within the treatment chamber to provide a slight vacuum (e.g. <1 bar, more typically between about 0.25 to about 0.75 bar, and preferably about 0.5 bar or about 0.4 bar). Whilst using a vacuum and a vacuum pump 60 is optional, it is desirable for reasons as explained elsewhere.

Fan 50, working in combination with vacuum pump 60, circulates recycled warm, dry or at least drier, gas 80 (typically air) through the treatment chamber 20, condenser 30, separator 40 and back into the treatment chamber 20 (via air inlet port 58).

Material to be treated, typically slurries comprising liquids and insoluble particles, such as, slurries of one or more oils, water and solids (e.g. drilling mud, drill cuttings and water, macerated fish waste etc.), is introduced into the chamber 20 at inlet end 20A via inlet port 25 and is drawn along the chamber towards the dry air inlet 58 and product outlet 120 by the material conveyor assembly 14. Material conveyor 14 can transport solids and liquids along it, and it heats and mixes these as it does so.

Product outlet 120 is provided at second end 20B of treatment chamber 20 (or at the end of a treatment zone) for receiving treated material (typically now substantially dry solids 130). A valve 124, preferably a rotary valve, allows exit of product usually now substantially dry solids from chamber 20 into a receiving bin 125 whilst maintaining a vacuum within chamber 20. A temperature gauge 123 may be used to measure the temperature T6 of the exiting solids.

During the travel of material from first end 20A to a second end 20B of treatment chamber 20, the material (e.g. slurry) is internally heated from the heated material conveyor assembly 14 (typically around 85% of heat is provided internally in this way) and optionally externally heated by heat from the external jacket (not shown) (typically up to 15% of heat is provided externally in this way). Oil(s) vapours and water vapour 110 evaporate because of the heat and low pressure and rise out of the material into air flow 80 to be carried back towards the first end 20A of treatment chamber 20 and out via gas outlet port 26. As the material (e.g. slurry) traverses the chamber from inlet first end 20A to second end 20B, it is continually heated and mixed preferably under a vacuum, preferably a slight vacuum of just under 0.5 bar (e.g. 0.4 - 0.5 bar). The material is progressively dried, preferably very gently, so that substantially all liquid phases evaporate by the time the material reaches the second end 20A of the chamber. Thus, the liquid components (e.g. oil(s) and water) have been removed and the solid component (e.g. dry sand, dry drill cuttings) remains to exit the chamber at outlet port 120.

The heat (and vacuum) provided to the chamber via internal heating from the screw conveyor and the optional external jacket (not shown) is controlled and is not sufficient to crack or chemically charge the components of the material being treated (e.g. slurry). Rather, the heat is sufficient to cause phase changes from liquid to vapour enabling oil(s) vapours and water vapour to be driven off from the slurry, thereby drying the slurry out as it traverses chamber 20. The slurry must therefore spend sufficient time within the chamber under the right process conditions for this to occur. Preferably the conditions (e.g. of temperature, pressure) are identified at which vapours (e.g. of oil and water) emerge from the slurry are first identified and these conditions are then maintained for a suitable period of time. For example for a slurry of SG 1.55 solids, oils and water, water and oil vapour may first be observed at 50°C or at around 60°C at less than atmospheric pressure of around e.g. 0.5 bar (-0.5 bar below atmospheric) - see Figure 11C.

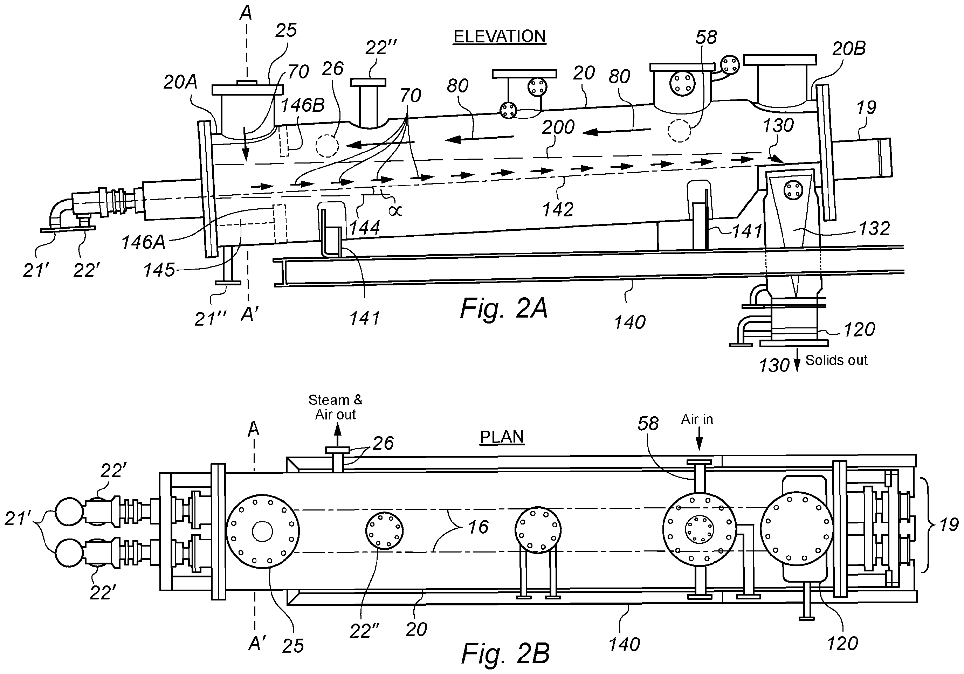

Treatment chamber 20 is preferably configured (as will be described with reference to Figure 2) so that the slurry (and liquids within it) tends to congregate towards first end 20A, and drier components (the solids) are lifted out of the slurry towards a second end 20B.

One or more temperatures around the apparatus 100 may be measured and used to feedback control to the system, as well as varied depending upon the type of slurry and % solid content being treated. Typically, slurry is at ambient temperature (e.g. 5 - 25°C or even 0-35°C) when it is loaded into the chamber. T2 is the temperature of the gas and vapours discharging from the treatment chamber. This vapour discharge temperature T2 entering the condenser may be around 125°C. In the low temperature, low energy embodiment of the invention, T2 is less than 100°C, or 50°C-100°C, or 60°C-100°C, or 60°C-80°C, or 65°C - 75°C. This can be achieved more easily when the system is at less than atmospheric pressure e.g. around 0.5 bar, or 0.4 - 0.5 bar. The slightly contaminated warm air from the condenser is reintroduced at the second end 20B giving a warm circulation air flow into the chamber. T3 is the cooling water temperature. T4 is the air temperature exiting the condenser. T5 is the air temperature leading back to the chamber (these are usually the same). T6 is the temperature of the discharged solids, and if no internal temperature sensor is provided, may be used as an estimate of the slurry temperatures.

Figure 2 shows an example treatment chamber 20 that may be used. Treatment chamber 20 has a central longitudinal axis 142 which is inclined at a small angle α to the horizontal 144. Typically the screw conveyer assembly is in line with the chamber so its longitudinal axis is parallel to that of the axis 142 of chamber 20 (although offset downwardly as seen in Figure 3).

Treatment chamber 20 therefore has a lower first end 20A and an upper second end 20B and screw conveyor assembly 14 is also corresponding lower at a first end compared to its second end. Typically, upper second end 20B of chamber 20 is 5 to 50cm above lower first end 20A (e.g. as measured at corresponding locations). The magnitude of the difference in height selected will, of course, depend on the length and diameter of the chamber and the length and diameter of the screw conveyor assembly, and the angle α.

Alternatively, the chamber itself may be generally horizontal and the screw conveyor assembly 14 may be at an angle within it so as to be at a predetermined angle α with respect to the horizontal.

In this example, treatment chamber 20 is mounted on frame 140, and variable height mountings 141 are provided at or near each end 20A, 20B, to facilitate variation of inclination angle α.

Figure 3 and 4 show respectively cross sectional and plan view of twin hollow thermal screw conveyors 114A, 114B forming a screw conveyor assembly 114 for use in the chamber of Figure 2.

A thermally heated screw conveyor assembly 114 (seen in Figure 3), comprising thermally heated hollow flight, intermeshing twin screw conveyors 114A and 114B, is provided extending from lower first end 20A to upper second end 20B. Although not shown in Figure 2, the centrelines 16 of screw conveyors 114A and 114B are typically substantially or generally parallel to the centreline e.g. the central longitudinal axis 142 of treatment chamber 20. In other words, screw conveyors 114A and 114B are also at a small angle α with respect to the horizontal. This slight inclination and the watertight nature of chamber 20 (or at least a lower portion thereof) means that liquidised slurries are contained in a lower portion of chamber 20 and these will tend under gravity to lie towards the first end 20A. The expected average surface level 200 of such fluidised slurries (which will be generally horizontal at a first end 20A of the chamber) will lie at a small angle to the screw conveyors 114A and 114B. Thus screw conveyors 114A, 114B will rise out of the slurry towards second end 20B. At or near the lower first end 20A of the chamber 20, the screw conveyors 114A, 114B are expected typically to be completely covered in slurry, whilst at or near the upper second end 20B of the chamber 20, the screw conveyors 114A, 114B will lie at least partially or completely above the expected upper surface level 200 of the liquidised slurry near the first end of 20A, and/or indeed above the expected upper surface level of solids near the upper second end 20B. If the chamber is horizontal but only the screw conveyor(s) are at an angle to the horizontal, these will still emerge above the level of drying slurry or solids near the second end 20B, but the first and second ends of the chamber will be at the same level. A motor and gear box are typically provided opposite second end 20B (not shown) to drive the twin screw conveyors 114A, 114B.

Treatment chamber 20 comprises a slurry inlet port 25, a solids outlet chute 130 and a solids outlet port 120. Chamber 20 comprises a thermal oil inlet 21' and a thermal oil outlet 22' for circulating thermal oil at a predetermined temperature Tₒᵢₗ to heat chamber 20 internally via a hollow material conveyer assembly preferably a hollow flight screw conveyer (not shown).

In Figure 2, slurry enters under gravity via inlet port 25 and is temporarily held in receiving cavity 145 by weir 146A extending centrally inwards (typically upwards from the floor and alternatively, or in addition, optionally a weir 146B downwards from the roof) of treatment chamber 20. The cavity 145 and weir(s) 146A, 146B may be offset from the centre of the treatment chamber, or indeed in a side chamber, so the incoming slurry does not fall directly on the screw conveyor assembly 114.

In a preferred embodiment, particularly suitable for less flowable or thicker slurries, downwardly projecting weir 146B (downwardly projecting from the roof of the chamber) may be provided with a generally or substantially horizontal lower bottom edge 147 which terminates just above the level of the screw conveyors 114A, 114B at the first end of the chamber. This bottom edge 147 is shown in Fig 3 as a dotted line. This downwardly projecting weir 146B functions to hold back slowly flowing thicker slurries from entering and flooding the chamber. Thicker slurries do not equalise levels quickly and not within the timescale of the transport of material e.g. 1 to 5 revolutions per minute. The bottom edge 147 of downwardly projecting weir 146B helps determine and control the level of slurry at the start of the chamber, i.e. typically just above the level of the screw conveyors 114A, 114B at that end of the chamber.

Treatment chamber 20 preferably has a double-walled construction (not shown) to also allow heating fluid such as thermal oil to flow in the intra-wall volume providing an externally heated jacket to the internal volume of chamber 20. Preferably, thermal oil (not steam) is circulated in the hollow flights of screw conveyors 114A, 114B to provide internal heating of chamber 20 via inlet port 21' and outlet port 22'. Optionally, thermal oil is circulated to double walled external jacket of chamber 20 via inlet port 21" and outlet port 22".

Other ways for heating the internal volume of chamber 20 may be used (e.g. electrical heating) although thermal oil heating is preferred for both internal and external heating for safety reasons, in part because of the dispersed and slowly changing nature of the heat provided, which can be important to avoid localised overheating of hydrocarbons.

The twin screw conveyors 114A, 114B are therefore preferably thermally heated e.g. by thermal oil (for reasons already stated elsewhere) passing through hollow flights to provide heated external surfaces over the flights and, to the furthermost tip of the flights. Heating the flights (preferably substantially over their external surface and preferably evenly to the tip of the flights) assists in ensuring there are no 'hot' or 'cold' spots that may cause inadvertent overheating or overcooling of the material during treatment. This, in turn, assists in preventing adhesion of debris to the flights and reduces risks of exceeding the flashpoint of the materials being treated. The internal heating will be described in more detail in relation to Figure 7.

Recirculated air 80 (indicated by arrows 80) enters chamber 20 by air inlet port 80 and travels in a generally opposing direction to the flow of slurry (arrows 70) and solids (arrows 130) through chamber 20. The size, shape and configuration of the various inlet and outlet ports, and the ducts described, may be varied and is limited only by nature, volume and weight of the material volumes being passed through them, and the need for watertight, and/or airtight fixings where described.

In one or more embodiments the present invention makes use of the relationship between the phase transition points of a substance and ambient pressure. As the pressure is decreased, so does the temperature of the liquid to gas phase transition of the substance. By ensuring a good seal throughout the apparatus and partial vacuum up to around -0.5 bar below atmospheric (e.g. 0.5 bar), lower temperatures may be used more effectively to separate gas/vapour(s) and dry solids, improving energy efficiency.

One example of a suitable treatment chamber is a hollow screw heat exchanger chamber of diameter of around 1m and length around 8m available from Thies GMbH Germany and this may be capable of processing 1000!/hour of slurry. Whilst a cylindrically shaped treatment chamber is preferred, alternative shapes may be used.

The chamber must have sufficient internal volume to allow the hollow screw conveyor to emerge from material being treated at a second end of the chamber and for gas to flow freely through the chamber preferably from the second end towards the first end. Thus there will preferably be a gap between the outermost periphery of the hollow screw conveyor and an innermost surface of the roof of the treatment chamber.

The treatment chamber 20 is in fluid communication with the condenser. One or both of the first and second ends 20A, 20B of the chamber may be at the very end walls of the chamber or somewhat inwardly displaced from the end walls of the chamber, in other words a treatment zone between the first and second ends may be smaller than actual dimension between end walls of the treatment chamber.

Separator 40 may be, for example, a disk stack centrifuge suitable for separating out oil, water, and any solids carried over from treatment chamber 20. Alternatively, separator 40 may comprise a simple T-piece (gas flows on, liquid(s) drop out).

The fan or blower 50 need not be particularly powerful, just sufficient to gently blow air (or indeed inert gas) around the system. Typical air speeds might be 0.5 to 5 metres per minute or less. Under a partial vacuum, air will not easily circulate and fan 50 ensures a slow, gentle air circulation occurs.

The temperature of the thermal oil circulating in the hollow flight screw conveyors is typically 150°C -280°C, more preferably 175°C- 250°C, more preferably 240°C or 250°C. The vacuum is preferably around 0.4 to 0.5 bar (1 bar being atmospheric pressure e.g. 760 mm Hg). In a preferred lower energy embodiment, the temperature of the oil may be around 200°C or 180°C-220°C or 190°C - 210°C. This is shown over time to deliver a slurry temperature of less than around 100°C and more typically 50°C-100°C or 60°C-80°C or, at or around 80°C, the temperature at which water and oil vapours start to emerge from the slurry, under a vacuum (typically 0.4-0.5 bar). In a more preferred, even lower energy embodiment (see Figures 11A to 11G), the temperature of the oil may be 130°C - 180°C, or 135°C - 175°C. Examples of this and typical temperatures of gas/vapour(s) extracted (60°C-80°C) are shown in Figures 11A to 11G.

During operation, T2, the temperature of extracted air and vapours may rise to around 115°C depending upon the product. In the lower energy embodiment of the invention the temperature of the extracted air and vapour is maintained at around 50°C-100°C, or more preferably 60°C-80°C or around 60°C, or 60°C-100°C, or at or around 80°C, or 50°C, or 60°C, or 70°C, or 80°C, or 90°C, or 100°C. Following first introduction, the slurry may take about 30 to 60 minutes to pass through (with substantially dry solids exiting at the second end 20B after this time). This will depend on the speed of rotation of the conveyor, temperature of the conveyor (and temperature and pressure in the chamber), level of vacuum etc. To begin with the slurry will tend to accumulate (under gravity at the first end 20A of the treatment chamber). The conveyor will nevertheless try to draw the slurry towards the second end and under optimal conditions succeeding when sufficient liquid has been evaporated and extracted to leave solid(s) behind which are then drawn along.

Thermal oil can operate up to around 350°C, however, desired temperature range in the chamber (because of the assistance of vacuum in changing the phase transition points of the liquid(s)) is around 200°C to 280°C or more preferably around 240°C to 260°C. Even more preferably in a lower temperature embodiment, the thermal oil may be 180°C-220°C, or 190°C - 210°C or around 200°C or even as low as 130°C -180°C (see Figures 11A to 11G).

The rotary valve typically opens around 10 times an hour. The screw conveyors (seen in Figures 3 to 7) typically rotate around 2 to 5 times per minute, preferably 2.5 or 5 times per minute, although even slower speeds of 1 or 1.5 times per minute can be used, especially in preferred lower energy embodiments.

During the transport of the slurry along the rotating screw conveyors 14, 114A, 114B (see Figures 2 to7), an intense heat exchange happens between the screw conveyors and the chamber contents as these are in direct contact with each other. Typically thermal oil will travel up a central shaft of a screw conveyor and back down through the continuous intra-wall volume of the hollow flights (see Figure 7). Alternatively, thermal fluid e.g. thermal oil can be configured to travel firstly up the hollow flights from an inlet and back down the central shaft before exiting The twin screw conveyors 114A 114B may be geared to rotate at slightly different speeds and/or to have certain outer flight profiles, so as to self-clean against one another. The twin screw conveyors 114A, 114B also have variable speed control to provide control over the revolutions per minute.

Preferably, internal heating is provided via the flights of the screw conveyors, as this is most efficient. Where external heating is provided e.g. a thermal jacket outside the chamber, it is still preferred that approximately 85% of the heat is still derived from internal heating via the screw conveyors. Experiments have shown that, even in a small trial chamber, 80 to 100 litres per hour of slurry can be processed.

The angle of incline α of the chamber (and hence the screw conveyors) can be varied and is typically 2.5 to 10°, preferably 2.5 to 5°, more preferably 5°, to the horizontal. The inclination of the screw conveyor assembly (and typically also the treatment chamber in which it is mounted) is preferably varied to optimise for the type of incoming material. For example, a steeper incline, say of 5° or more to the horizontal, may be useful for wetter slurries with a lower percentage of solids, so that the dwell time in the chamber is longer, whereas a lower incline, say 2.5º to the horizontal may be useful for drier slurries with a higher percentage of solids. Similarly the speed of rotation of the screw conveyor can be varied to increase or decrease the level of agitation and dwell time within the chamber. Preferably the thermal oil is at 240 to 260°C, more preferably 240 to 250°C and the vapour extract temperature is 60°C, 70°C, 80°C, 90°C, 100°C or 60°C-100°C, 60°C-80°C or around 80°C (see also Figures 11A to 11G).

Because of the internal thermal heating, heat is distributed evenly over outer surface of the two interlocking, heated, hollow flight screw conveyors. This is desirable as it maintains drying throughout the chamber from first to second ends. The solids should reach the required moisture level just before the discharge chute 132. The degree of moisture in the exiting solids can be controlled by controlling one or more of the input rate of slurry, angle of incline, temperature of the thermal oil, vacuum, airflow and rotation of the screw conveyors, to optimise the process for particular input materials.

Figure 5 shows alternative screw conveyors 214A, 214B and solids 130 (here sand) just prior to egress from the chamber via outlet chute 132 and outlet port 120 into a solids collecting bin 125.

Figure 6 shows a typical, long (e.g. 3 to 5m) screw conveyer 114A, 114B in isolation with hollow flights 154. This might be used in a larger machine or for faster flow rates, to assist in ensuring sufficient dwell time drying within treatment chamber 20.

Figure 7 shows a cross-sectional view of a screw-conveyer 114A, 114B with a thermal fluid inlet 21' and thermal fluid outlet 22'. The screw conveyers preferably are circular in cross-section (see Figure 3). The thermal fluid is preferably oil. Preferably oil travels in from inlet 21' through a hollow central shaft of screw conveyer 114A, 114B. The inlet of oil is indicated by arrows 112A. In this example embodiment, the central shaft 114 widens into an internal chamber 150 towards a distal end before exiting chamber 150 into a continuous spiral shaped hollow chamber 152 within hollow flights 154. The oil then flows around outside the central shaft and chamber 150, spiralling around the spiral hollow chamber 152 within hollow flights 154 as shown by arrows 112B, taking heat from oil in the central shaft 149 and chamber 150, and providing heat to the surrounding slurry being treated. Preferably the flights are evenly spaced and evenly sized along the length of screw conveyers 114A, 114B. Thus, in one example embodiment, the slurry being treated (see arrows 70 in Figure 2) is travelling in a generally opposing direction to the overall direction of travel of thermal oil, in the hollow flights 154, back along the chamber from second end 20B to first end 20A. Alternatively, in certain circumstances e.g. when particularly intense heating is needed at the start of the chamber 20, the thermal fluid flow can be configured such that thermal fluid, e.g. oil, may be inputted first into the hollow flights 152 (in a direction opposite to arrows 112B in Figure 7) to then be transported to the very tips of the hollow flights and the distal end of the hollow flight thermal screw conveyer 114A, 114B then back down through the central chamber 150 in a direction opposite to arrows 112A, before exiting the screw conveyer 114A, 114B at a proximal end.

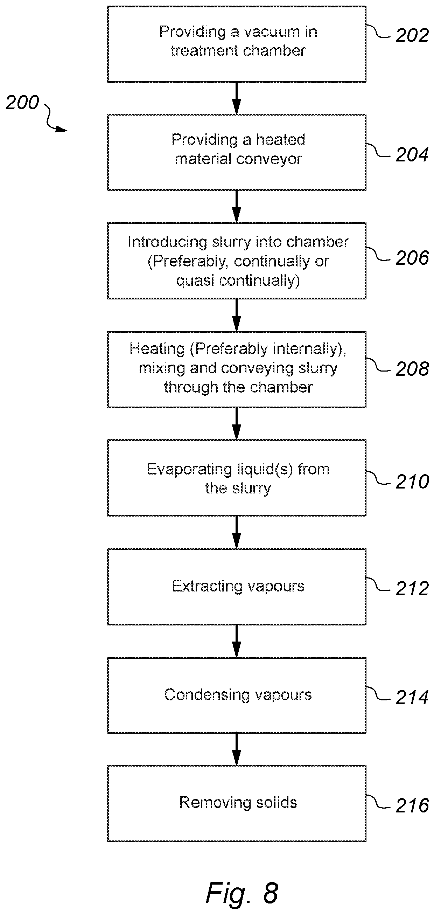

In Figure 8, method steps for a method 200 of treating material such as slurries comprising liquid(s) and insoluble solids, and in particular slurries comprising solids, oil(s) and water, are shown. Method 200 comprises the step 202 of providing a vacuum in a treatment chamber. Step 204 comprises providing a heated material conveyor, preferably a screw conveyor assembly as described elsewhere herein. Next, step 206 comprises introducing slurry into the chamber, preferably continually, or quasi-continually (e.g. in repeated batches). Next, step 208 comprises, heating, mixing and conveying the slurry through the chamber 20. Preferably the heating is internally applied to the slurry in the chamber e.g. by means of a thermally heated material conveyor, preferably a thermally heated screw conveyor as described elsewhere herein. Optionally, external heating (e.g. from an external jacket to chamber 20, and/or recirculating warm gas) may be provided. Next step 210 comprises evaporating liquid(s) from the slurry. Typically, this occurs because of heating and low pressure) but preferably also because of the mixing to distribute heat and bring inner material so the surface of the slurry, so liquids can more easily evaporate.

The provision of a slight vacuum e.g. 0.25 to 0.75 bar, about 0.4 bar or about 0.5 bar, or preferably 0.4-0.5 bar, assists in evaporation by lowering the ambient pressure, lowering the temperature at which evaporation can occur. Nevertheless, provision of a heating and a vacuum, and evaporation of vapour(s) from the slurry may not be enough to drive the vapours by convection alone towards the condenser. In any case, provision of a small, gentle (low pressure) gas flow (preferably air or inert gas) provides a circulation of vapour(s) out of treatment chamber 20, but also ensures as the gas above the slurry becomes loaded with vapours, it is moved away to be replaced with drier (preferably re-circulated) gas. This replacement of damp air (or gas) with dry air (or gas) provides a beneficial diffusion gradient encouraging further evaporation of liquid(s).

Step 212 comprises extracting vapours from the treatment chambers 20. Step 214 comprises condensing the oil(s) vapours and water vapour into liquid oil(s) and liquid water. Step 216 comprises removing solids 130 from the treatment chamber 20.

It will be understood, that the steps of the method may occur in one or more sequences sequentially, or contemporaneously.

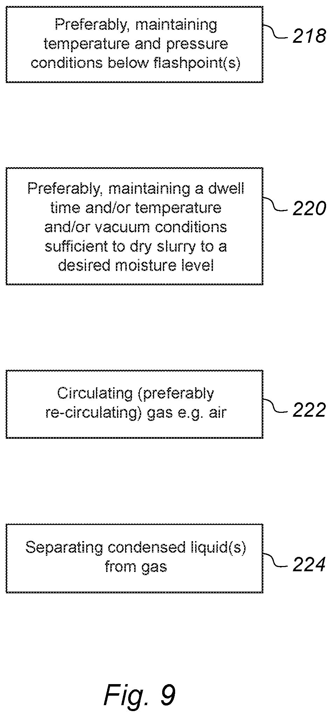

In Figure 9 several optional preferred steps are shown. Step 218 comprises maintaining temperature and pressure conditions below the flash points of the materials involved. (The flash point is the temperature/pressure combination at which vapour(s) above a liquid will ignite in the presence of a spark. Step 220 comprises maintaining a dwell time in treatment chamber 20 and/or temperature and/or vacuum conditions sufficient to dry slurry into solids to a desired moisture level e.g. <1% by weight (e.g. of water or hydrocarbons). Step 222 comprises circulating preferably re-circulating gas, preferably air. Step 224 comprises separating condensed liquid(s) from gas. A further optional step comprises separating liquids e.g. oil(s) from water.

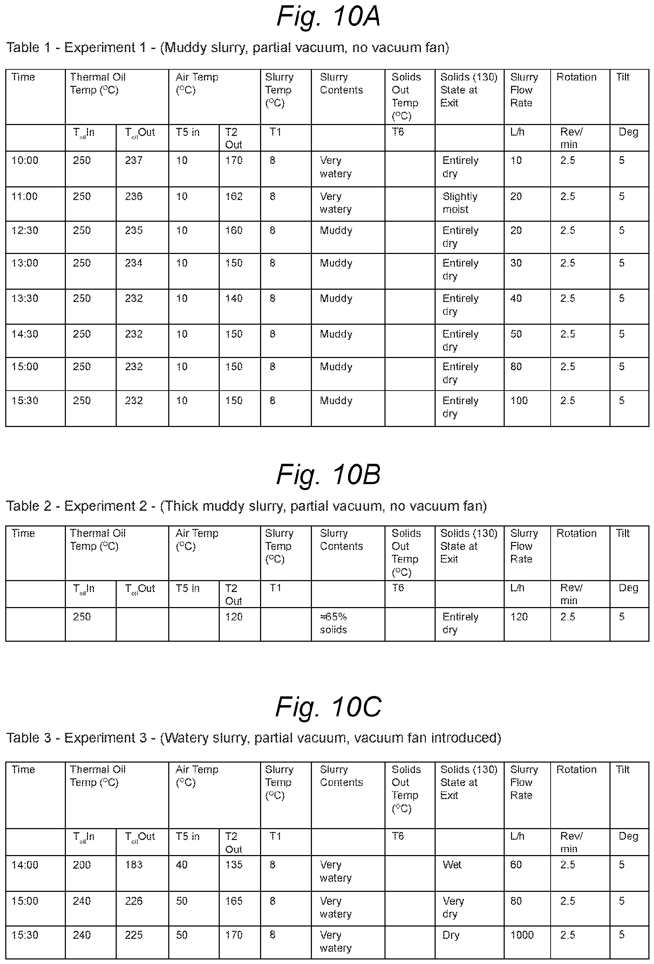

Figures 10A to 10D show various experiments.

In Figure 10A, not according to the invention, 10A, watery muddy at 8°C is treated, and in most cases dried, in a treatment chamber 20 such as that shown in Figures 1 and 2 with, in this case, twin thermally heated hollow flight screw conveyors and an external jacket. The thermal oil circulating in the hollow flights and external jacket enters inlet ports 21', 21" at 250°C and exits at the temperatures shown (Toil Out). The air was not recirculated and the air temperature T5 entering the chamber at 20 via air inlet duct 56 was 10°C. The air exit temperature T2 is as shown. The inclination of chamber 20 was 5 degrees (although 2.5 degrees has been tried) and the screw conveyors 114A, 114B were rotated in a self-cleaning manner (at slightly different speeds) at 2.5 revolutions per minute. The slurry flow rate was increased from 10l/h to 100l/h. The product (solids 130) at exit via chute 132 and outlet port 120 varied from slightly moist to entirely dry.

The 'slightly moist' result might be explained by the apparatus warming up.

Figure 10B, not according to the invention, shows brief results from a single run inputting a thick slurry comprising about 65% solids by weight at a high flow rate of 120l/h. The exiting solids were entirely dry.

Figure 10C shows results for a watery slurry after a partial vacuum and a fan to circulate were introduced. A watery slurry was inputted, and an initial thermal oil temperature of 200°C was used. This was not sufficient a flow rate of 60l/h and the exiting solids 130 were wet. Once the thermal oil temperature increased to 240°C (and the exiting oil temperature was above 220°C), even at a relatively high flow rate of 80l/h and 100l/h, the exiting solids were dry.

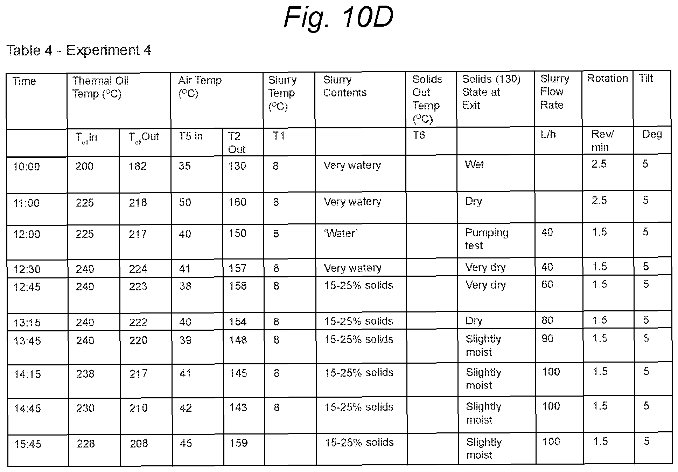

Figure 10D shows results for, firstly, a watery slurry with a thermal oil input temperature Toil-In of 200°C at 2.5 revolutions per minute. It appears that once the thermal oil heated to 225°C and the chamber had heated up (e.g. as evidence by exiting air temperature T2 increasing from 130°C to 160°C), dry product (solids 130) was produced. After cleaning and pump testing, in a second experiment with a watery slurry of 15%-20% solids by weight a thermal temperature of 240°C and 1.5 revolutions per minute produced very dry product (solids 130) at 60l/h and 80l/h.

However once the flow rate was increased to 90l/h then 100!/h the exiting product (solids 130) was slightly moist, indicating a variation in process conditions may be required. For example the thermal oil input temperature was not able to be maintained at 240°C (the thermal oil is recirculated, dropping to 238°C then to 228°C indicating that the throughput load of slurry, or % of liquid in the slurry may have been less than optimal.

Following analysis, the oil distillate from similar experiments using the method(s) and/or apparatus of the invention, from drilling mud or cuttings was thought to be (by flash point and boiling point analysis) a mixture of hydrocarbons e.g. a fraction of crude oil distillation such as diesel oil, although a non-smoky flame associated with unsaturated aliphatic hydrocarbons indicated it may be kerosene or diesel oil. The oil distillate may therefore be used as a fuel or for re-use in drilling muds. Further analysis showed that the aqueous distillate was of low conductivity although slightly contaminated by oil. Oil and water could be easily separated by a tilt-plate separator. Exiting solids were predominantly composed of finely ground rock with elemental metals together with about 2.5% oil. These could be disposed to landfill under appropriate licence or reused in asphaltic road tarmacadam or lightweight concrete.

Later results from experiments 3 and 4 (see Figures 10C and 10D) provided water samples that have been analysed and found to be pure enough to be fit for disposal to the public sewer in the UK.

Figures 11A to 11D show various experimental results. Figure 11A shows results for a thick slurry with no vacuum requiring Tₒᵢₗln at 210°C and with (relatively) hot extracted gases at 120°C, but in which good separation was achieved.

Figure 11B shows a similar thick slurry in which a reduction in air pressure from 1 atmosphere by 0.1 bar (to 0.9 bar) initially and then -0.5 bar (to 0.5 bar) enabled a reduction in heat into the system. The thermal oil temperature could be reduced from 180°C to 150°C then 135°C with good results.

Figure 11C shows a repeat of the same conditions of the last stage of Table 6 (Fig 11B) but with a slightly wetter slurry of specific gravity 1.55. Good results were obtained.

Figure 11D shows similar results, although for the slightly wetter slurry of SG 1.35, a Tₒᵢₗln of 155°C to give good separation at higher slurry flow rate of 120 l/h at 1.5 revs/min.

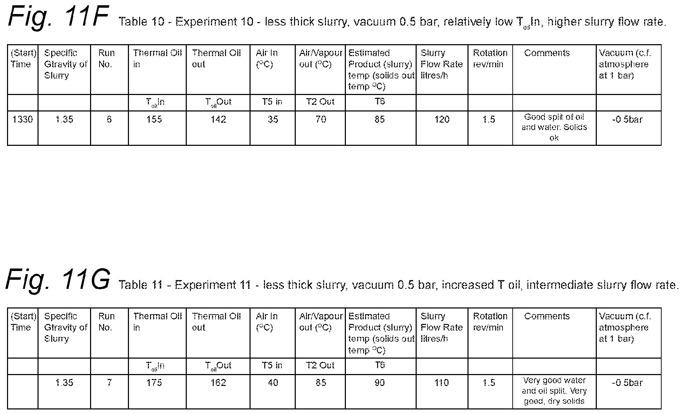

Figure 11E shows a thicker slurry at the higher flow rate of 120l/h, whereas Figure 11F shows a wetter slurry of SG 1.35 at the higher flow rate of 120 l/h required Tₒᵢₗln of 155°C, but could be improved upon. Raising the Tₒᵢₗln to 175°C and lowering the flow rate to 110 l/h improved matters, as shown in Fig 11G.

Inclination of screw conveyors and chambers in all these embodiments is 5°.

Variations on the described apparatus and method(s) may be apparent to those skilled in the art from the information contained therein. For example, although twin (preferably hollow) screw conveyors are described, triple, or more preferably quadruple (or greater numbers) of (preferably hollow) screw conveyors may be used. Preferably these will all lie in the same plane and interact one with another, e.g. conveyor 1 with conveyor 2, conveyor 2 with conveyors 1 and 3, conveyor 3 with conveyors 2 and 4, and conveyor 4 with conveyor 3. Or two twin conveyors may be provided (screw conveyor 1 interacting with conveyor 2, and conveyor 3 interacting with conveyor 4). The exact arrangement of the being selected (along with process conditions) to suit the nature of the slurry being separated and dried. Also whilst co-rotation is preferred (e.g. all screw conveyors, where used, rotate in the same direction, say anti-clockwise), it is envisaged that counter rotating screw conveyors may be used.

## Claims

1. A method for treating slurry in an apparatus, the apparatus comprising a treatment chamber (20) having a first end (20A) configured to receive slurry to be treated and a second end (20B) configured to allow egress of solids, and having an internal volume to allow a heated hollow screw conveyor (14, 114A, 114B) to emerge from material being treated at the second end and for gas to flow freely through the chamber;
the method comprising:
- introducing slurry into the treatment chamber (20);
- using at least one heated hollow screw conveyor (14, 114A, 114B) to heat, mix, and draw material comprising slurry and/or solids through the treatment chamber (20) in a direction from the first end (20A) towards the second end (20B);
- providing a vacuum in the treatment chamber (20);
- evaporating liquid(s) to form vapour(s) from the slurry;
- flowing gas through the chamber (20) at a flow rate of about 0.5 m/s or less;
- drawing gas and vapour(s) through the chamber (20) into a condenser;
- condensing extracted vapours into liquid(s);
- separating extracted gases and liquid(s) and re-circulating separated gas into the treatment chamber (20);
- removing solid(s) from the chamber (20);
**characterised by**
- providing a vacuum in the treatment chamber of 0.2 to 0.9 bar;
- flowing gas into and through the chamber (20) from a gas inlet port (58) at or near the second end (20B) and extracting gas out of the chamber at a gas outlet port (28) at or near a first end (20A) so that gas flows above the slurry in a direction generally, or substantially, opposite to the direction of movement of slurry through the treatment chamber (20) from the first end (20A) towards the second end (20B), and so that vapours from the slurry rise out of the slurry into the flow of gas and are carried towards the first end;
- controlling the temperature of the vapour(s) exiting the chamber to be 50°C to 100°C.

2. A method according to claim 1 comprising:
- providing a vacuum in the treatment chamber (20) of 0.25 to 0.75 bar.

3. A method according to any preceding claim comprising:
- providing a vacuum in the treatment chamber (20) of 0.4 to 0.5 bar.

4. A method according to any preceding claim comprising:
- controlling the temperature of the vapour(s) exiting the chamber to be 60°C to 100°C, or 60°C to 80ºC.

5. A method according to any preceding claim:
in which the temperature of vapours exiting the chamber (20) is less than a temperature of a flashpoint of any of the ingredients of the slurry.

6. A method according to any preceding claim comprising:
- controlling the temperature of exiting solids to be <100°C, 50°C to 90°C, 60°C to 80°C, 50°C, 55°C, 60°C, 65°C, 70°C, 75°C, 80°C, 85°C, 90°C, 95°C.

7. A method according to any preceding claim comprising not chemically changing the components of the slurry during treatment.

8. A method according to any preceding claim comprising
- providing a fan (50) and a vacuum pump (10) and working these in combination to circulate recycled warm, drier gas (80) through the treatment chamber (20), a condenser (30), and a separator (40) and back into the treatment chamber (20).

9. A method according to claim 8 in which re-circulated gas comprises dry or drier air.

10. A method according to any preceding claim comprising: selecting, configuring, and controlling one or more parameters from the following:
- pressure within the treatment chamber (20);
- transportation time of slurry and/or solids within the treatment chamber (20) from an inlet port to an exit port;
- temperature of incoming slurry;
- temperature of re-circulated gas following a vapour condensing step;
- temperature of the heated material conveyor (14, 114A, 114B);
- temperature of the solid(s)on egress;
- temperature of the thermal oil inlet (21, 21', 21");
- temperature of thermal oil outlet (22, 22', 22");
- rotation of the heated screw conveyors where provided;
- % of solids by mass of incoming material;
- rate of ingress of incoming material;
- moisture level of solid(s) on egress;
- incline of the chamber (20);
- controlling the level of slurry on ingress
so that solid(s) on egress have a desired moisture level, and/or are free from hydrocarbons to a desired level.

11. A method according to claim 10 comprising:
- treating slurry in the treatment chamber (20) such that the solids are substantially dry comprising less than 2.5%, or 2%, or 1%, by weight of liquids before removal.

12. A method according to any preceding claim comprising treating waste slurry from oil and/or gas drilling operations, and/or for treating waste slurry from fish processing

## Patentansprüche

1. Verfahren zur Behandlung von Aufschlämmung in einer Vorrichtung, wobei die Vorrichtung eine Behandlungskammer (20) umfasst, die ein erstes Ende (20A), das konfiguriert ist, um zu behandelnde Aufschlämmung aufzunehmen, und ein zweites Ende (20B), das konfiguriert ist, um Austritt von Feststoffen zu ermöglichen, aufweist, und ein Innenvolumen aufweist, um zu ermöglichen, dass ein beheizter Hohlschneckenförderer (14, 114A, 114B) aus behandeltem Material an dem zweiten Ende hervortritt und dass Gas frei durch die Kammer strömt;
wobei das Verfahren Folgendes umfasst:
- Einführen von Aufschlämmung in die Behandlungskammer (20);
- Verwenden von zumindest einem beheizten Hohlschneckenförderer (14, 114A, 114B) zum Erhitzen, Mischen und Ziehen von Material, das Aufschlämmung und/oder Feststoffe umfasst, durch die Behandlungskammer (20) in einer Richtung von dem ersten Ende (20A) zu dem zweiten Ende (20B);
- Bereitstellen eines Vakuums in der Behandlungskammer (20);
- Verdampfen von Flüssigkeit(en), um Dampf/Dämpfe aus der Aufschlämmung zu bilden;
- Strömen von Gas durch die Kammer (20) mit einer Strömungsrate von etwa 0,5 m/s oder weniger;
- Ziehen von Gas und Dampf/Dämpfen durch die Kammer (20) in einen Kondensator;
- Kondensieren von extrahierten Dämpfen zu Flüssigkeit(en);
- Abscheiden von extrahierten Gasen und Flüssigkeit(en) und Rezirkulieren von abgeschiedenem Gas in die Behandlungskammer (20);
- Entfernen von Feststoff(en) aus der Kammer (20);
**gekennzeichnet durch**
- Bereitstellen eines Vakuums in der Behandlungskammer von 0,2 bis 0,9 bar;
- Strömen von Gas in und durch die Kammer (20) von einer Gaseinlassöffnung (58) an oder nahe dem zweiten Ende (20B) und Extrahieren von Gas aus der Kammer an einer Gasauslassöffnung (28) an oder nahe einem ersten Ende (20A), sodass Gas über der Aufschlämmung in einer Richtung im Allgemeinen oder im Wesentlichen entgegengesetzt zu der Bewegungsrichtung von Aufschlämmung durch die Behandlungskammer (20) von dem ersten Ende (20A) zu dem zweiten Ende (20B) strömt, und sodass Dämpfe von der Aufschlämmung aus der Aufschlämmung in die Strömung von Gas aufsteigen und zu dem ersten Ende getragen werden;
- Steuern der Temperatur des Dampfes/der Dämpfe, der/die aus der Kammer austritt/austreten, auf 50 °C bis 100 °C.

2. Verfahren nach Anspruch 1, umfassend:
- Bereitstellen eines Vakuums in der Behandlungskammer (20) von 0,25 bis 0,75 bar.

3. Verfahren nach einem vorhergehenden Anspruch, umfassend:
- Bereitstellen eines Vakuums in der Behandlungskammer (20) von 0,4 bis 0,5 bar.

4. Verfahren nach einem vorhergehenden Anspruch, umfassend:
- Steuern der Temperatur des Dampfes/der Dämpfe, der/die aus der Kammer austritt/austreten, auf 60 °C bis 100 °C oder 60 °C bis 80 °C.

5. Verfahren nach einem vorhergehenden Anspruch:
wobei die Temperatur von Dämpfen, die aus der Kammer (20) austreten, weniger als eine Temperatur eines Flammpunktes von einem beliebigen der Bestandteile der Aufschlämmung ist.

6. Verfahren nach einem vorhergehenden Anspruch, umfassend:
- Steuern der Temperatur von austretenden Feststoffen auf <100 °C, 50 °C bis 90 °C, 60 °C bis 80 °C, 50 °C, 55 °C, 60 °C, 65 °C, 70 °C, 75 °C, 80 °C, 85 °C, 90 °C, 95 °C.

7. Verfahren nach einem vorhergehenden Anspruch, umfassend kein chemisches Ändern der Komponenten der Aufschlämmung während Behandlung.

8. Verfahren nach einem vorhergehenden Anspruch, umfassend
- Bereitstellen eines Gebläses (50) und einer Vakuumpumpe (10) und Betreiben dieser in Kombination, um recyceltes warmes, trockeneres Gas (80) durch die Behandlungskammer (20), einen Kondensator (30) und einen Abscheider (40) und zurück in die Behandlungskammer (20) zu zirkulieren.

9. Verfahren nach Anspruch 8, wobei das rezirkulierte Gas trockene oder trockenere Luft umfasst.

10. Verfahren nach einem vorhergehenden Anspruch, umfassend: Auswählen, Konfigurieren und Steuern von einem oder mehreren Parameter aus den folgenden:
- Druck innerhalb der Behandlungskammer (20);
- Transportzeit von Aufschlämmung und/oder Feststoffen innerhalb der Behandlungskammer (20) von einer Einlassöffnung zu einer Ausgangsöffnung;
- Temperatur von eingehender Aufschlämmung;
- Temperatur von rezirkuliertem Gas nach einem Dampfkondensationsschritt;
- Temperatur des beheizten Materialförderers (14, 114A, 114B);
- Temperatur des Feststoffes/der Feststoffe bei Austritt;
- Temperatur des Wärmeöleinlasses (21, 21', 21");
- Temperatur des Wärmeölauslasses (22, 22`, 22");
- Drehung der beheizten Schneckenförderer, wenn bereitgestellt;
- % an Feststoffen nach Masse an eingehendem Material;
- Eintrittsrate an eingehendem Material;
- Feuchtigkeitsgehalt des Feststoffes/der Feststoffe bei Austritt;
- Neigung der Kammer (20);
- Steuern des Niveaus der Aufschlämmung bei Eintritt,
sodass der/die Feststoff(e) bei Austritt ein gewünschtes Feuchtigkeitsniveau aufweisen und/oder bis zu einem gewünschten Niveau frei von Kohlenwasserstoffen sind.

11. Verfahren nach Anspruch 10, umfassend:
- Behandeln von Aufschlämmung in der Behandlungskammer (20), sodass die Feststoffe im Wesentlichen trocken sind und weniger als 2,5 Gew.-% oder 2 Gew.-% oder 1 Gew.-% Flüssigkeiten vor Entfernung umfassen.

12. Verfahren nach einem vorhergehenden Anspruch, umfassend Behandeln von Abfallaufschlämmung aus Öl- und/oder Gasbohrvorgängen und/oder zum Behandeln von Abfallaufschlämmung aus der Fischverarbeitung.

## Revendications

1. Procédé permettant le traitement de boue dans un appareil, l'appareil comprenant une chambre de traitement (20) comportant une première extrémité (20A) conçue pour recevoir la boue à traiter et une seconde extrémité (20B) conçue pour permettre la sortie de solides, et comportant un volume interne pour permettre à un transporteur à vis creux chauffé (14, 114A, 114B) d'émerger du matériau en cours de traitement au niveau de la seconde extrémité et au gaz de s'écouler librement à travers la chambre ;
le procédé comprenant :
- l'introduction de boue dans la chambre de traitement (20) ;
- l'utilisation d'au moins un transporteur à vis creux chauffé (14, 114A, 114B) pour chauffer, mélanger et prélever un matériau comprenant de la boue et/ou des solides à travers la chambre de traitement (20) dans une direction allant de la première extrémité (20A) vers la seconde extrémité (20B) ;
- la création d'un vide dans la chambre de traitement (20) ;
- l'évaporation d'un ou plusieurs liquides pour former une ou plusieurs vapeurs à partir de la boue ;
- l'écoulement de gaz à travers la chambre (20) à un débit inférieur ou égal à environ 0,5 m/s ;
- le prélèvement de gaz et d'une ou plusieurs vapeurs à travers la chambre (20) dans un condenseur ;
- la condensation de vapeurs extraites en un ou plusieurs liquides ;
- la séparation de gaz extraits et d'un ou plusieurs liquides et la recirculation du gaz séparé dans la chambre de traitement (20) ;
- l'enlèvement d'un ou plusieurs solides de la chambre (20) ;
**caractérisé par**
- l'obtention d'un vide dans la chambre de traitement de 0,2 à 0,9 bar ;
- l'écoulement du gaz dans et à travers la chambre (20) à partir d'un orifice d'entrée de gaz (58) au niveau ou à proximité de la seconde extrémité (20B) et l'extraction du gaz hors de la chambre au niveau d'un orifice de sortie de gaz (28) au niveau ou à proximité d'une première extrémité (20A) de sorte que le gaz s'écoule au-dessus de la boue dans une direction globalement, ou sensiblement, opposée à la direction de déplacement de la boue à travers la chambre de traitement (20) à partir de la première extrémité (20A) vers la seconde extrémité (20B), et afin que des vapeurs en provenance de la boue montent hors de la boue dans l'écoulement de gaz et soient entraînées vers la première extrémité ;
- la régulation de la température de la ou des vapeurs sortant de la chambre pour qu'elle soit de 50°C à 100°C.

2. Procédé selon la revendication 1 comprenant :
- l'obtention d'un vide dans la chambre de traitement (20) de 0,25 à 0,75 bar.

3. Procédé selon une quelconque revendication précédente comprenant :
- l'obtention d'un vide dans la chambre de traitement (20) de 0,4 à 0,5 bar.

4. Procédé selon une quelconque revendication précédente comprenant :
- la régulation de la température de la ou des vapeurs sortant de la chambre pour qu'elle soit de 60°C à 100°C, ou de 60°C à 80°C.

5. Procédé selon une quelconque revendication précédente :
dans lequel la température des vapeurs sortant de la chambre (20) est inférieure à une température d'un point éclair de l'un quelconque des ingrédients de la boue.

6. Procédé selon une quelconque revendication précédente comprenant :
- la régulation de la température de solides sortants pour qu'elle soit < 100°C, de 50°C à 90°C, de 60°C à 80°C, à 50°C, à 55°C, à 60°C, à 65°C, à 70°C, à 75°C, à 80°C, à 85°C, à 90°C, à 95°C.

7. Procédé selon une quelconque revendication précédente, comprenant l'absence de modification chimique des composants de la boue durant le traitement.

8. Procédé selon une quelconque revendication précédente comprenant
- la fourniture d'un ventilateur (50) et d'une pompe à vide (10) et le fonctionnement de ceux-ci en combinaison pour faire circuler un gaz plus sec et chaud recyclé (80) à travers la chambre de traitement (20), un condenseur (30) et un séparateur (40) et retour dans la chambre de traitement (20).

9. Procédé selon la revendication 8, dans lequel le gaz en recirculation comprend de l'air sec ou plus sec.

10. Procédé selon une quelconque revendication précédente comprenant : la sélection, la configuration et la régulation d'un ou plusieurs paramètres parmi les suivants :
- la pression à l'intérieur de la chambre de traitement (20) ;
- le temps de transport de boue et/ou de solides à l'intérieur de la chambre de traitement (20) à partir d'un orifice d'entrée jusqu'à un orifice de sortie ;
- la température de la boue entrante ;
- la température du gaz re-circulé suite à une étape de condensation de vapeur ;
- la température du transporteur de matériau chauffé (14, 114A, 114B) ;
- la température du ou des solides en sortie ;
- la température de l'entrée d'huile thermique (21, 21', 21") ;
- la température de la sortie d'huile thermique (22, 22', 22") ;
- la rotation des transporteurs à vis chauffés, le cas échéant ;
- % de solides en masse de matière entrante ;
- le taux d'entrée des matériaux entrants ;
- le taux d'humidité d'un ou plusieurs solides en sortie ;
- l'inclinaison de la chambre (20) ;
- la régulation du niveau de boue en entrée afin qu'un ou plusieurs solides en sortie comportent un niveau d'humidité souhaité et/ou soient exempts d'hydrocarbures à un niveau souhaité.

11. Procédé selon la revendication 10, comprenant :
- le traitement de boue dans la chambre de traitement (20) de sorte que les solides soient sensiblement secs comprenant moins de 2,5 %, ou 2 %, ou 1 %, en poids de liquides avant élimination.

12. Procédé selon une quelconque revendication précédente, comprenant le traitement de boues de déchets provenant d'opérations de forage pétrolier et/ou gazier, et/ou pour le traitement de boues de déchets en provenance du traitement du poisson.
